# EUROPÄISCHE PATENTANMELDUNG

(11) **EP 0 778 173 A2**
(43) Veröffentlichungstag der Anmeldung: **11.06.1997**
(21) Anmeldenummer: 96119277.0
(22) Anmeldetag: 02.12.1996
(51) Int. Cl.: B60N 2/44

(54) **Sitz mit druckveränderlichen Hohlkammern, die eine elastische Stützwand aufweisen**

(30) Priorität: 04.12.1995 DE 19545168
(71) Anmelder: Bayerische Motoren Werke Aktiengesellschaft, 80788 München (DE)
(72) Erfinder: Theissig, Werner, 80999 München (DE); Leyerer, Roland, 83059 Kolbermoor (DE)

(57) **Zusammenfassung**

Sitz mit druckveränderlichen Hohlkammern (3, 3', 3'', 3'''), die eine elastische Stützwand aufweisen und die in der Sitzfläche angeordnet und über jeweils ein Ventil (Einlaßventil 9, Auslaßventil 14) einerseits mit einer Druckleitung (10) und andererseits mit einer Auslaßleitung (15) zu verbinden sind. In den Hohlkammern (3, 3', 3'', 3''') ist jeweils ein Druckaufnehmer (8, 8', 8'', 8''') angeordnet, der wie die Ventile (Einlaßventil 9, Auslaßventil 14) mit einer Regelungseinrichtung (11) verbunden ist, die Soll-Druckwerte für die Hohlkammern (3, 3', 3'', 3''') speichert und mit den tatsächlichen Druckwerten in den Hohlkammern (3, 3', 3'', 3''') vergleicht sowie bei Abweichungen von Soll-Druckwerten die Ventile (Einlaßventil 9, Auslaßventil 14) entsprechend ansteuert. In der Sitzfläche sind in Längsrichtung der Schenkelauflageflächen (4, 4') und im Gesäßauflagebereich (6) jeweils mehrere Hohlkammern (3, 3') angeordnet, denen jeweils ein mit der Regelungseinrichtung (11) verbundener Druckaufnehmer (8, 8', 8'', 8''') zugeordnet ist.

## Beschreibung

Die Erfindung betrifft einen Sitz mit druckveränderlichen Hohlkammern, mit den im Oberbegriff des Patentanspruches 1 angegebenen Merkmalen.

Ein derartiger Sitz ist durch die DE 35 41 537 A1 bekannt, der im Sitz- und Lehnenbereich mehrere Luftkammern aufweist, die zur Einstellung einer bestimmten Körperdruckverteilung unterschiedliche Druckwerte aufweisen können. In jede Luftkammer mündet eine Pneumatikleitung, die von einem Ventil verschließbar ist und einerseits mit einer Druckleitung und andererseits mit einer Auslaßleitung verbunden ist, in der sich ein Ablaßventil befindet. In einer von der Druckleitung abzweigenden Nebenleitung ist ein einziger Drucksensor angeordnet, der durch aufeinanderfolgendes Verbinden dieser Nebenleitung mit der jeweiligen Luftkammer die Bestimmung des Luftdrucks in dieser Luftkammer ermöglicht. Bei dieser Anordnung ist es nicht möglich, gleichzeitig in einer Luftkammer den Luftdruck zu erhöhen und in einer beliebigen anderen Kammer zu erniedrigen. Die Druckleitung kann nicht kostengünstig von einem Druckspeicher mit konstantem Druck belastet sein, da beim Öffnen des Ablaßventiles in der Auslaßleitung der Druck in der Druckleitung schlagartig abfällt. Mit dem einzigen Drucksensor ist die wechselseitige Druckbeeinflussung der Luftkammern untereinander nicht zu erfassen bzw. zu berücksichtigen. In der Sitzfläche sind lediglich wenige Luftkammern vorgesehen, die bei den lokal unterschiedlichen Flächenbelastungen durch den Sitzbenutzer keine gezielte Druckentlastung beispielsweise in einem Flächenbereich mit besonders hoher Flächenpressung ermöglichen.

Ein ähnlicher Fahrzeugsitz ist in der DE 40 22 433 C2 beschrieben, bei dem die Luftkammern mit einem an- und abschwellenden Druck belastbar sind, um eine Massagewirkung zu erreichen.

Der Erfindung liegt die Aufgabe zugrunde, einen Sitz mit den im Oberbegriff des Patentanspruches 1 angegebenen Merkmalen anzugeben, der an den von dem Sitzbenutzer belasteten Sitzflächenbereichen eine lokale Druckveränderung ermöglicht.

Diese Aufgabe ist durch die im Patentanspruch 1 angegebenen Merkmale gelöst. Durch die Anordnung von mehreren, zumindest mit einer elastischen Stützwand versehenen Hohlkammern mit Druckaufnehmern sowohl in Längsrichtung der Schenkelauflageflächen als auch im Gesäßauflagebereich kann an den stark belasteten Sitzflächenbereichen der Druck in den betreffenden Hohlkammern abgesenkt werden, wodurch sich die Flächenpressung an der Körperoberfläche des Sitzbenutzers entsprechend vermindert. Bei lediglich gering belasteten Flächen kann der Druck in den betreffenden Hohlkammern erhöht werden, um eine gleichmäßigere Flächenbelastung zu erreichen. Der Sitzkomfort wird dadurch wesentlich verbessert. Der Blutkreislauf des Sitzbenutzers kann mit einer alternierenden, beispielsweise wellenförmig fortschreitenden Druckveränderung in den einzelnen Kammern angeregt werden, beispielsweise um eine Ermüdung des Sitzbenutzers zu vermeiden. Nachdem in jede Hohlkammer eine über ein Ventil verschließbare Druckleitung und eine von einem Ventil verschließbare Auslaßleitung mündet, können einzelne oder mehrere Hohlkammern gleichzeitig mit Druckluft und andere Hohlkammern zur Druckabsenkung mit einer Auslaßleitung verbunden werden, wobei über die Druckaufnehmer in den Hohlkammern die Wechselwirkungen der unterschiedlichen Drücke in den Hohlkammern erfaßt und bei Abweichungen sofort korrigiert werden.

Vorteilhafte Ausgestaltungen der Erfindung sind Gegenstand von Unteransprüchen.

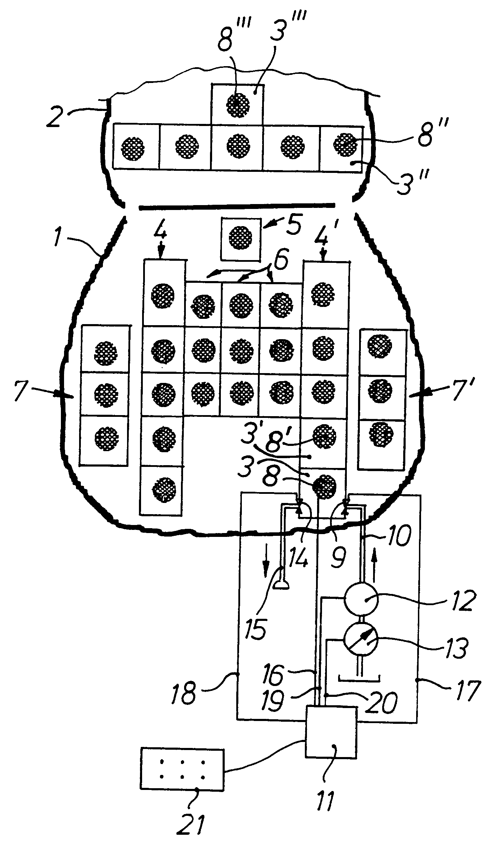

Ein Ausführungsbeispiel der Erfindung wird anhand einer Zeichnung mit einer einzigen Figur näher erläutert, die eine Prinzipskizze darstellt.

In der einzigen Figur ist ein Sitz eines Kraftfahrzeugs mit Blick auf die Oberfläche des Sitzteiles 1 und den unteren Bereich der Rückenlehne 2 vereinfacht dargestellt. Unter der Klimazone des Sitzteiles 1 und der Rückenlehne 2 ist jeweils eine in mehrere Hohlkammern 3, 3' und 3'', 3''' aufgeteilte elastische Matte gelegt. Jede Hohlkammer weist zumindest eine obere elastische Stützwand auf, über die der Druck in der Sitzauflagefläche des Sitzbenutzers veränderlich ist. Um die Übersichtlichkeit zu wahren, sind lediglich einige der Hohlkammern 3, 3', 3'', 3''' mit Bezugszahlen versehen. Wie sich aus der Figur ergibt, sind in den beiden Schenkeauflageflächen 4, 4' jeweils fünf Hohlkammern hintereinander angeordnet. Im Steißbeinbereich 5 eines Sitzbenutzers ist eine weitere Hohlkammer und davor im Gesäßauflagebereich 6 sind weitere neun Hohlkammern etwa gitterartig angeordnet. Zur seitlichen Stütze sind seitlich außen in einem Seitenbereich 7, 7' der Schenkelauflageflächen 4, 4' jeweils drei weitere Hohlkammern hintereinander angeordnet. Etwa im Lendenbereich der Rückenlehne 2 sind horizontal nebeneinander fünf Hohlkammern vorgesehen, wobei sich über der im Wirbelsäulenbereich des Sitzbenutzers befindlichen Hohlkammer eine weitere Hohlkammer 3''' befindet. In jeder Hohlkammer 3, 3', 3'', 3''' ist ein Druckaufnehmer 8, 8', 8'', 8''' vorgesehen, die beispielsweise unterhalb, oberhalb oder in der oberen Hohlkammerwand der betreffenden Hohlkammer 3, 3', 3'', 3''' angeordnet sind. Aus Gründen einer besseren Übersichtlichkeit sind lediglich einige der Druckaufnehmer 8, 8', 8'', 8''' mit Bezugszahlen versehen. Anhand der Hohlkammer 3 wird nachfolgend vereinfacht angegeben, wie der Druck in jeder der Hohlkammern 3, 3', 3'', 3''' erhöht oder erniedrigt werden kann. In jede Hohlkammer 3, 3', 3'', 3''' mündet eine von einem Einlaßventil 9 verschließbare Druckleitung 10, die von einer Regelungseinrichtung 11 vorzugsweise mit konstantem Druck belastbar ist. Hierzu ist in der Druckleitung 10 ein Druckspeicher 12 angeordnet, der von einer Pumpe 13 oder dergleichen aufzuladen ist, die ein gasförmiges oder flüssiges Medium, vorzugsweise Luft aus der Umgebung oder bei Ausbildung der Regelungseinrichtung als geschlossenes System aus einem Niederdruckspeicher ansaugt. Außerdem mündet in jede der Hohlkammern 3, 3', 3'', 3''' eine von einem Auslaßventil 14 verschließbare Auslaßleitung 15, die mit dem entspannten Medium bzw. der Umgebungsluft oder einem Niederdruckspeicher verbunden ist. Durch die Pfeile ist die Zufluß- und Abflußrichtung angegeben. Die Druckaufnehmer 8, 8', 8'', 8''' sind jeweils über eine Druckerfassungsleitung 16 mit der Regelungseinrichtung 11 verbunden. Außerdem sind alle Einlaßventile 9 über jeweils eine Steuerleitung 17 und alle Auslaßventile 14 über jeweils eine Steuerleitung 18 mit der Regelungseinrichtung 11 verbunden und von dieser ansteuerbar, um das betreffende Einlaß- 9 bzw. Auslaßventil 14 zu öffnen bzw. zu schließen. An die Regelungseinrichtung 11 sind des weiteren der Druckspeicher 12 über eine Leitung 19 und die Pumpe 13 über eine Leitung 20 angeschlossen. In der Regelungseinrichtung bzw. einem Datenspeicher davon sind Soll-Druckwerte für alle Hohlkammern 3, 3', 3'', 3''' eingegeben bzw. über Bedienelemente 21 von dem Sitzbenutzer manuell einzugeben und zu speichern. Im Fahrbetrieb erfolgt ständig oder nach vorgegebenen bzw. einstellbaren Zeiträumen für alle Hohlkammern 3, 3', 3'', 3''' gleichzeitig durch Erfassung der jeweiligen Drücke in den Hohlkammern 3, 3', 3'', 3''' über die Druckaufnehmer 8, 8', 8'', 8''' und Vergleich mit den gespeicherten Soll-Druckwerten eine Nachregulierung des betreffenden Drucks in der jeweiligen Hohlkammer 3, 3', 3'', 3''', bis die gemessenen Drücke etwa mit den jeweiligen Soll-Druckwerten übereinstimmen. Die Soll-Druckwerte sind oder werden von der Regelungseinrichtung 11 auf solche Werte eingestellt, daß ein ermüdungsfreies Sitzen ohne übermäßige örtliche Druckbelastung möglich ist. In der Regelungseinrichtung 11 sind maximale Druckbelastungen für die jeweiligen Hohlkammern 3, 3', 3'', 3''' eingegeben, die nicht überschritten werden. Die Regelungseinrichtung kann auch eine Einrichtung, beispielsweise eine Elektronik, aufweisen, die über Sensoren die Konstitution und/oder Sitzbewegungen eines Sitzbenutzers erfaßt und daraus selbsttätig neue Soll-Druckwerte ermittelt, die für den Regelungsvorgang maßgebend sind. Bei der selbsttätigen Bestimmung der Soll-Druckwerte durch die Regelungseinrichtung werden gespeicherte Druckverteilungen und eventuell von einem bestimmten Sitzbenutzer früher eingestellte Druckverteilungen für Soll-Druckwerte berücksichtigt. Bei dem Ausführungsbeispiel sind alle Druckaufnehmer 8, 8', 8'', 8''' Hydrosensoren mit in Flüssigkeit eingebetteten piezoresistiven Drucksensoren, die den Druck in der Flüssigkeit richtungsunabhängig erfassen. Die Drucksensoren weisen beispielsweise einen Durchmesser von 20 mm und eine Dicke von ca. 2 bis 3 mm auf, die in der die Hohlkammern aufweisenden Matte eingebettet sind. Mit den druckveränderlichen Hohlkammern 3'', 3''' in der Rückenlehne 2 kann die Druckbelastung an der Wirbelsäule eines Sitzbenutzers günstig verändert werden. Mit den äußeren Hohlkammern 8'' wird bei Seitenbeschleunigungen beispielsweise bei Kurvenfahrt eine seitliche Rückenstütze bewirkt. Eine seitliche Stütze der Schenkel des Sitzbenutzers, beispielsweise bei Kurvenfahrt, wird über die in den Seitenbereichen 7, 7' angeordneten Hohlkammern bewirkt.

Die Erfindung kann auch von dem Ausführungsbeispiel abweichend ausgeführt werden. Die Hohlkammern können lediglich im Sitzteil eines Sitzbenutzers oder wie bei dem Ausführungsbeispiel auch an der Rückenlehne vorgesehen sein. Die Verteilung und Größe der Hohlkammern ist an sich beliebig. Vorzugsweise ist jede Hohlkammer mit einem Druckaufnehmer versehen. Es können aber auch andere Hohlkammern vorgesehen sein, die nicht druckveränderlich sind und deshalb keinen zugeordneten Druckaufnehmer aufweisen. Das Einlaß- und Auslaßventil können beliebige Ventile sein, die beispielsweise zu einem gemeinsamen Ventil verbunden sind. Von jeder betreffenden Hohlkammer kann Luft oder ein anderes gasförmiges oder flüssiges Medium aufgenommen sein. Wesentlich ist, daß die Hohlkammer zumindest im Sitzflächenbereich eine elastische Stützwand aufweist, über die durch Druckveränderung in der Hohlkammer der in der Sitzauflagefläche des Sitzbenutzers wirkende Druck lokal veränderlich ist.

## Patentansprüche

1. Sitz mit druckveränderlichen Hohlkammern, die eine elastische Stützwand aufweisen und die in der Sitzfläche angeordnet und über jeweils ein Ventil einerseits mit einer Druckleitung und andererseits mit einer Auslaßleitung zu verbinden sind, sowie mit einem in der Sitzfläche angeordneten Druckaufnehmer, der wie die Ventile mit einer Regelungseinrichtung verbunden ist, die Soll-Druckwerte für die Hohlkammern speichert und mit den tatsächlichen Druckwerten in den Hohlkammern vergleicht sowie bei Abweichungen von den Soll-Druckwerten entsprechend ansteuert, dadurch gekennzeichnet, daß in der Sitzfläche in Längsrichtung der Schenkelauflageflächen (4, 4') und im Gesäßauflagebereich (6) jeweils mehrere Hohlkammern (3, 3') angeordnet sind, denen jeweils ein mit der Regelungseinrichtung (11) verbundener Druckaufnehmer (8, 8') zugeordnet ist.

2. Sitz nach Anspruch 1, dadurch gekennzeichnet, daß der Druckaufnehmer (8, 8', 8'', 8''') unterhalb, oberhalb oder in der oberen Hohlkammerwand der betreffenden Hohlkammer (3, 3', 3'', 3''') angeordnet ist.

3. Sitz nach Anspruch 1 oder 2, dadurch gekennzeichnet, daß der Druckaufnehmer (8, 8', 8'', 8''') ein Hydrosensor mit in Flüssigkeit eingebetteten piezo-resistiven Drucksensoren ist, die den Druck in der Flüssigkeit richtungsunabhängig erfassen.

4. Sitz nach einem der Ansprüche 1 bis 3, dadurch gekennzeichnet, daß etwa im Lendenbereich der Rückenlehne (2) des Sitzes mehrere Hohlkammern (3'', 3''') mit jeweils einem Druckaufnehmer (8'', 8''') angeordnet sind.

5. Sitz nach einem der Ansprüche 1 bis 4, dadurch gekennzeichnet, daß die Regelungseinrichtung (11) ständig oder jeweils nach einer vorgegebenen Zeitspanne die Soll-Druckwerte mit den tatsächlichen Druckwerten in den Hohlkammern (3, 3', 3'', 3''') vergleicht.

6. Sitz nach einem der Ansprüche 1 bis 5, dadurch gekennzeichnet, daß die Soll-Druckwerte in Abhängigkeit von den Sitzbenutzer in seiner Konstitution und/oder seinen Sitzbewegungen erfassenden Sensoren von der Regelungseinrichtung (11) selbsttätig und/oder manuell von dem Sitzbenutzer vorzugeben sind.

7. Sitz nach Anspruch 5, dadurch gekennzeichnet, daß die Regelungseinrichtung (11) bei der selbsttätigen Bestimmung der Soll-Druckwerte gespeicherte Druckverteilungen und einen maximal zulässigen Druck in den Hohlkammern (3, 3', 3'', 3''') berücksichtigt.

8. Sitz nach einem der Ansprüche 1 bis 7, dadurch gekennzeichnet, daß in jede Hohlkammer (3, 3', 3'', 3''') eine von einem Ventil (Einlaßventil 9) verschließbare Druckleitung (10) mündet, die mit einem Druckspeicher (12) verbunden ist, der im Fahrbetrieb die Druckleitung (10) mit etwa konstantem Druck belastet.

9. Sitz nach einem der Ansprüche 1 bis 8, dadurch gekennzeichnet, daß in jede Hohlkammer (3, 3', 3'', 3''') eine von einem Ventil (Auslaßventil 14) verschließbare Auslaßleitung (15) mündet, die mit der Umgebungsluft oder einem Niederdruckspeicher verbunden ist.
